(19)

Europäisches
Patentamt
European
Patent Office
Office européen
des brevets

(11) **EP 2 801 911 A1**

(12) **EUROPEAN PATENT APPLICATION**
published in accordance with Art. 153(4) EPC

(43) Date of publication:
**12.11.2014 Bulletin 2014/46**

(21) Application number: **12864659.3**

(22) Date of filing: **06.01.2012**

(51) Int Cl.:
*G06F 13/00* (2006.01)          *G06F 12/00* (2006.01)
*H04N 7/173* (2011.01)

(86) International application number:
**PCT/JP2012/050158**

(87) International publication number:
**WO 2013/103012 (11.07.2013 Gazette 2013/28)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(71) Applicant: **Fujitsu Limited**
**Kawasaki-shi, Kanagawa 211-8588 (JP)**

(72) Inventors:
• **MURATA, Miho**
  **Kawasaki-shi**
  **Kanagawa 211-8588 (JP)**

• **TSUCHIMOTO, Yuichi**
  **Kawasaki-shi**
  **Kanagawa 211-8588 (JP)**

(74) Representative: **Hoffmann Eitle**
**Patent- und Rechtsanwälte PartmbB**
**Arabellastraße 30**
**81925 München (DE)**

(54) **INFORMATION PROCESSING DEVICE, DATA MANAGEMENT METHOD, AND PROGRAM**

(57)     Traffic for data management is reduced in an information processing system including a plurality of storage devices.

A storage section (11) stores segment information indicative of the correspondences between segments and keys. A control section (12) divides, according to an increase in data which belongs to a segment, the segment into a plurality of segments and updates the segment information. In addition, the control section (12) allows data that belongs to at least one of a plurality of second segments obtained by dividing a first segment once or by hierarchically dividing the first segment N (N>1) times, at the time of the N meeting a determined condition, to be moved from a storage device which stores data that belongs to the first segment to another storage device. The control section (12) restricts the movement of data at the time of the N not meeting the determined condition.

FIG. 1

EP 2 801 911 A1

**Description**

Technical Field

The embodiments discussed herein are related to an information processing apparatus, a data management method, and a program.

Background Art

The method of associating keys with data and saving them in one or more storage devices is known as one of data management methods in information processing systems. For example, software, such as application software, designates a key and performs data manipulation, such as data reading or data writing. It is assumed that data is distributed and saved in a plurality of storage devices. For example, a key and a hash function are used for determining a save destination storage device of data. In addition, a key and a hash function are used for searching for a storage device in which desired data is saved.

Furthermore, the method of dividing a set of keys into plural segments and managing data on a segment basis is known as a method for efficiently managing data. For example, the method of determining a save destination storage device of data on a segment basis is proposed. A method using a binary tree referred to as, for example, a PHT (Prefix Hash Tree) is proposed as the method of dividing a set of keys into plural segments and assigning the keys to the segments.

A binary number whose length corresponds to depth from a root node is given to each node of the PHT as a label. The root node has node 0 and node 1 as child nodes. Node 0 has node 00 and node 01 as child nodes. A key is represented by a binary number and its prefix (portion of the key corresponding to several bits from the head) and a label are compared. By doing so, each key is assigned to a leaf node (node having no child node). Keys and data are managed on a segment basis, where each segment corresponds to a leaf node. The depth of the PHT (degree of segment division) is determined according to, for example, the amount of data to be managed.

Citation List

Non-Patent Literature

NPTL1: Yatin Chawathe, Sriram Ramabhadran, Silvia Ratnasamy, Anthony LaMarca, Scott Shenker and Joseph Hellerstein, "A Case Study in Building Layered DHT Applications", Proceeding of the ACM SIGCOMM 2005 conference on Applications, technologies, architectures and protocols for computer communications, August 22-26, 2005.

Summary of Invention

Technical Problem

By the way, as an information processing system is operated, data is written to storage devices. As a result, the amount of data to be managed may increase. Accordingly, when data is managed on a segment basis, a segment in which the amount of data is large may be dynamically divided further into plural segments. In order to distribute the load on the information processing system, data which belongs to at least one of the plural segments obtained by the division may be moved from a storage device to which the segment before the division is assigned to another storage device.

However, if data is moved from one storage device to another each time a segment is divided, then traffic for data management increases. This may impede essential data access. For example, if many of data accesses from the outside are for adding data, there is a possibility that half of traffic on a network in the information processing system is for moving data from one storage device to another.

Solution to Problem

According to an aspect, there is provided an information processing apparatus used in an information processing system which divides a set of keys associated with data to be stored into a plurality of segments and which manages the arrangement of the data in a plurality of storage devices on a segment basis. The information processing apparatus includes a storage section and a control section. The storage section stores segment information indicative of the correspondences between the segments and the keys. The control section divides, according to an increase in data which belongs to a segment, the segment into a plurality of segments and updates the segment information. In addition, when a plurality of second segments are obtained by dividing a first segment once or by hierarchically dividing the first segment N (N>1) times and the N meets a determined condition, the control section allows data which belongs to at least one of the plurality of second segments to be moved from a first storage device which stores data that belongs to the first segment to a second storage device. When the N does not meet the determined condition, the control section restricts the movement of data that belongs to the plurality of second segments.

According to another aspect, there is provided a data management method used by an information processing system which divides a set of keys associated with data to be stored into a plurality of segments and which manages the arrangement of the data in a plurality of storage devices on a segment basis. With this data management method, a segment is divided into a plurality of segments according to an increase in data which belongs to the segment, and segment information indicative of the correspondences between the segments and the keys is updated. When a plurality of second segments are obtained by dividing a first segment once or by hierarchically dividing the first segment N (N>1) times and N meets a determined condition, data that belongs to at least one of the plurality of second segments is allowed to be moved from a first storage device which stores data that belongs to the first segment to a second storage device. When N does not meet the determined condition, the movement of data that belongs to the plurality of second segments is restricted.

According to still another aspect, there is provided a program executed by a computer used in an information processing system which divides a set of keys associated with data to be stored into a plurality of segments and which manages the arrangement of the data in a plurality of storage devices on a segment basis. This program makes the computer divide, according to an increase in data which belongs to a segment, the segment into a plurality of segments and update segment information indicative of the correspondences between the segments and the keys. This program makes the computer allow, at the time of a plurality of second segments being obtained by dividing a first segment once or by hierarchically dividing the first segment N (N>1) times and the time of N meeting a determined condition, data that belongs to at least one of the plurality of second segments to be moved from a first storage device which stores data that belongs to the first segment to a second storage device, and makes the computer restrict the movement of data that belongs to the plurality of second segments at the time of N not meeting the determined condition.

Advantageous Effects of Invention

Traffic for data management in an information processing system including a plurality of storage devices is reduced.

The above and other objects, features and advantages of the present invention will become apparent from the following description when taken in conjunction with the accompanying drawings which illustrate preferred embodiments of the present invention by way of example.

Brief Description of Drawings

[FIG. 1] FIG. 1 illustrates an information processing apparatus according to a first embodiment.
[FIG. 2] FIG. 2 illustrates an information processing system according to a second embodiment.
[FIG. 3] FIG. 3 is a block diagram of an example of hardware of a server apparatus.
[FIG. 4] FIG. 4 illustrates an example of request handling.
[FIG. 5] FIG. 5 illustrates an example of a segment management tree.
[FIG. 6] FIG. 6 illustrates an example of a method for arranging in a server apparatus data which belongs to a segment.
[FIG. 7] FIG. 7 is a block diagram of an example of software of a server apparatus.
[FIG. 8] FIG. 8 is a flow chart of an example of segment division.
[FIG. 9] FIG. 9 indicates an example of a threshold for a segment.
[FIG. 10] FIG. 10 is a flow chart of an example of a data transfer determination process.
[FIG. 11] FIG. 11 indicates an example of a segment for which transfer is allowed in the case of label conversion method 1 being applied.
[FIG. 12] FIG. 12 indicates an example of a segment for which transfer is allowed in the case of label conversion method 2 being applied.
[FIG. 13] FIG. 13 is a flow chart of an example of request handling.
[FIG. 14] FIG. 14 is a sequence diagram of an example of operation in the information processing system.

Description of Embodiments

Embodiments will now be described with reference to the drawings.

(First Embodiment)

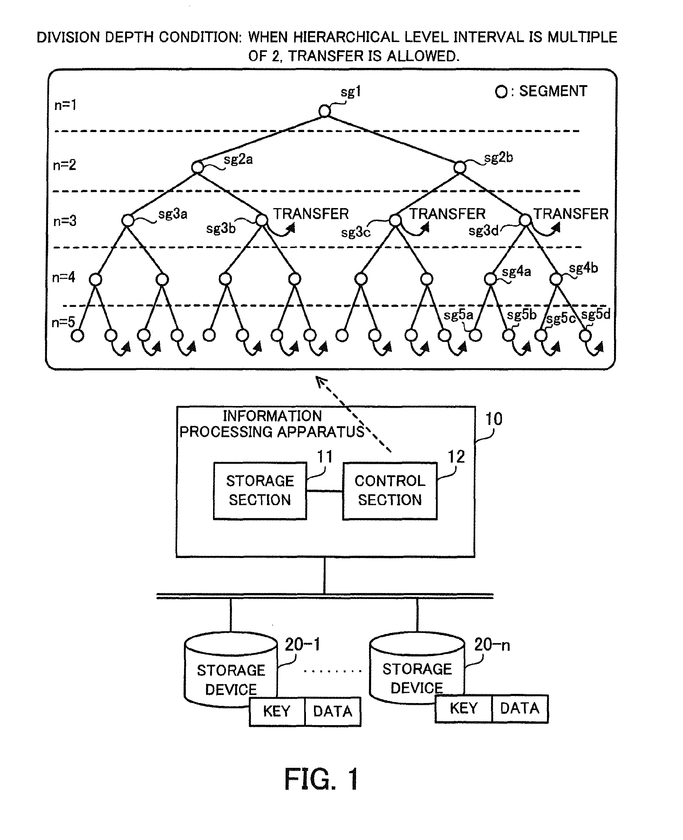

FIG. 1 illustrates an information processing apparatus according to a first embodiment. An information processing apparatus 10 is used in an information processing system which divides a set of keys associated with data to be stored into a plurality of segments and which manages the arrangement of the data in storage devices 20-1 through 20-n (n is a natural number greater than or equal to two) on a segment basis. A part of the storage devices 20-1 through 20-n may be included in the information processing apparatus 10. The information processing apparatus 10 includes a storage section 11 and a control section 12.

The storage section 11 stores segment information. The segment information indicates the relationships between keys and segments. As illustrated in FIG. 1, segments are represented by a hierarchical structure. A hierarchical structure may be a Trie tree, a prefix tree, or the like. The storage section 11 may be a storage unit, such as a RAM (Random Access Memory) or a HDD (Hard Disk Drive).

The control section 12 divides, according to an increase in data which belongs to a segment (such as an increase in the amount of data which belongs to a segment or an increase in the number of keys associated with data which belongs to a segment), the segment into a plurality of segments and updates segment information. For example, the control section 12 refers to segment information stored in the storage section 11, and divides, on the basis of the amount of data which belongs to a segment or the number of keys associated with data which belongs to a segment and a threshold, the segment into two or more segments. The control section 12 confirms the amount of the data or the number of the keys, for example, by gaining access to a storage device in which the segment is arranged.

In the example of FIG. 1, a segment is hierarchically divided into two segments. A circle indicates a segment and an arrow indicates that data which belongs to a segment is transferred from one storage device to another. In addition, n indicates a hierarchical level. In the example of FIG. 1, two segments are generated in turn from one segment by division. 16 segments are generated at a hierarchical level corresponding to n=5.

When a plurality of segments are generated by performing hierarchical division operations with a segment as reference, the control section 12 determines whether or not each division operation meets a determined division depth condition. If a division operation meets the determined division depth condition, then the control section 12 allows data which belongs to at least one of generated plural segments to be moved (to be transferred) from a storage device which stores data that belongs to an original segment to another storage device. Furthermore, if a division operation does not meet the determined division depth condition, then the control section 12 restricts the movement of data which belongs to generated plural segments.

For example, a division depth condition is whether or not an interval between a hierarchical level to which an original segment belongs and a hierarchical level to which generated plural segments belong is a multiple of a determined hierarchical level interval greater than or equal to two. If a hierarchical level interval is a multiple of the determined hierarchical level interval, then the division depth condition is met. If a hierarchical level interval is not a multiple of the determined hierarchical level interval, then the division depth condition is not met. Information indicative of the determined hierarchical level interval is stored in advance in, for example, the storage section 11.

For example, it is assumed that the determined hierarchical level interval is 2. As illustrated in FIG. 1, when a segment sg1 which belongs to a hierarchical level corresponding to n=1 is divided, the interval between the hierarchical level corresponding to n=1 and a hierarchical level corresponding to n=2 is 1. Accordingly, the movement of data which belongs to segments sg2a and sg2b at the second hierarchical level is restricted.

On the other hand, the interval between a hierarchical level corresponding to n=3 and the hierarchical level corresponding to n=1 is 2. Accordingly, the control section 12 allows data which belongs to at least one of segments sg3a, sg3b, sg3c, and sg3d at the hierarchical level corresponding to n=3 to be transferred from a storage device which stores data that belongs to the segment sg1 at the hierarchical level corresponding to n=1 to another storage device. As illustrated in FIG. 1, for example, data which belongs to the three segments sg3b, sg3c, and sg3d at the hierarchical level corresponding to n=3 is transferred from the storage device which stores the data that belongs to the segment sg1 at the hierarchical level corresponding to n=1 to another storage device.

Furthermore, in FIG. 1, it is assumed that the control section 12 further divides, for example, the rightmost segment sg3d at the hierarchical level corresponding to n=3. The interval between a hierarchical level corresponding to n=4 and the hierarchical level corresponding to n=1 is 3. Accordingly, the movement of data which belongs to segments sg4a and sg4b, which are child segments of the segment sg3d, at the hierarchical level corresponding to n=4 is restricted. On the other hand, the interval between a hierarchical level corresponding to n=5 and the hierarchical level corresponding to n=1 is 4. Accordingly, data which belongs to at least one of segments sg5a, sg5b, sg5c, and sg5d, which are grandchild segments of the segment sg3d, is allowed to be transferred from a storage device which stores data that belongs to the segment sg3d to another storage device. As illustrated in FIG.1, for example, data which belongs to the segments sg5b, sg5c, and sg5d is transferred from the storage device which stores the data that belongs to the segment sg3d at the hierarchical level corresponding to n=3 to another storage device.

By the way, in the example of FIG. 1, data which belongs to the segment sg5a, which is a grandchild segment of the segment sg3d, is not transferred. This indicates that the data which belongs to the segment sg5a remains in the storage device which stores the data that belongs to the segment sg3d. A technique for making distinctions in this way among plural segments which are equal in division depth from a segment about whether to allow transfer or not will be described later.

The control section 12 may be realized as a program executed by the use of a CPU (Central Processing Unit) and a RAM.

As has been described, the control section 12 hierarchically divides a segment and generates plural segments, which are descendants of the segment. If division does not meet a determined division depth condition at this time, then the movement of data which belongs to generated segments to another storage device is restricted.

As a result, when a segment is divided, data transfer does not always occur. This checks an increase in the amount of data transferred at the time of distributing the load on an information processing system. Accordingly, the movement of data from one storage device to another at load distribution time does not impede, for example, access by a user to data in the information processing system.

(Second Embodiment)

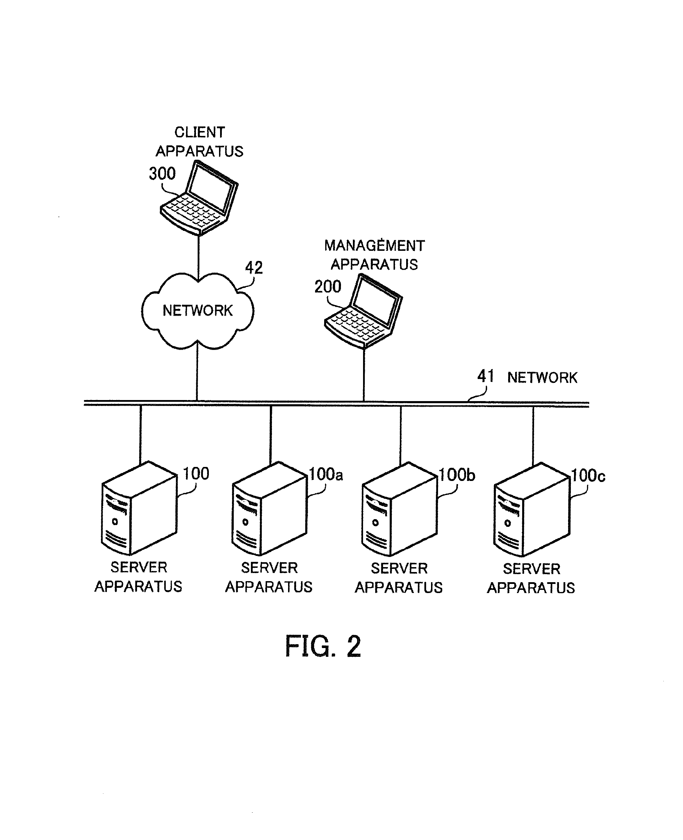

FIG. 2 illustrates an information processing system according to a second embodiment. An information processing system according to a second embodiment includes server apparatus 100, 100a, 100b, and 100c, a management apparatus 200, and a client apparatus 300. The server apparatus 100, 100a, 100b, and 100c and the management apparatus 200 are connected to a network 41. The client apparatus 300 is connected to a network 42. The information processing system according to the second embodiment may be realized as what is called a cloud system.

Each of the server apparatus 100, 100a, 100b, and 100c is a server computer which exercises distributed management of data. Each of the server apparatus 100, 100a, 100b, and 100c associates keys for identifying data with the data, stores them, and holds segment information for searching on the basis of a key for a server apparatus in which data is stored. Any of the server apparatus 100, 100a, 100b, and 100c can accept from the client apparatus 300 a request to handle data. A server apparatus which accepts a request including a key searches on the basis of segment information for a server apparatus in which data to be handled is stored, and requests the server apparatus to handle the data.

The management apparatus 200 is a computer used by a user (manager of the information processing system, for example). The management apparatus 200 manages the server apparatus 100, 100a, 100b, and 100c on the basis of operation by the user. For example, when a server apparatus which stores data is added to the information processing system, the management apparatus 200 transmits information regarding the added server apparatus to the server apparatus 100, 100a, 100b, and 100c. In addition, the management apparatus 200 transmits to the server apparatus 100, 100a, 100b, and 100c setting information for adjusting the distributed arrangement of data.

The client apparatus 300 is a computer used by a user (user of cloud services, for example). For example, application software which handles data stored in the server apparatus 100, 100a, 100b, or 100c is executed on the client apparatus 300. The client apparatus 300 transmits to any of the server apparatus 100, 100a, 100b, and 100c via the networks 41 and 42 a request to handle data. One key or a range of a key is designated in a request. Data handling includes data reading and data writing.

Even when any of the server apparatus 100, 100a, 100b, and 100c receives a request from the client apparatus 300, messages are transmitted among the server apparatus 100, 100a, 100b, and 100c. By doing so, data handling requested is performed. As has been described, with the information processing system according to the second embodiment it is possible to make a design so as to prevent as much as possible an apparatus which becomes a data handling bottleneck from appearing. Availability, response performance, and the like are improved.

(Example of Hardware of Server Apparatus)

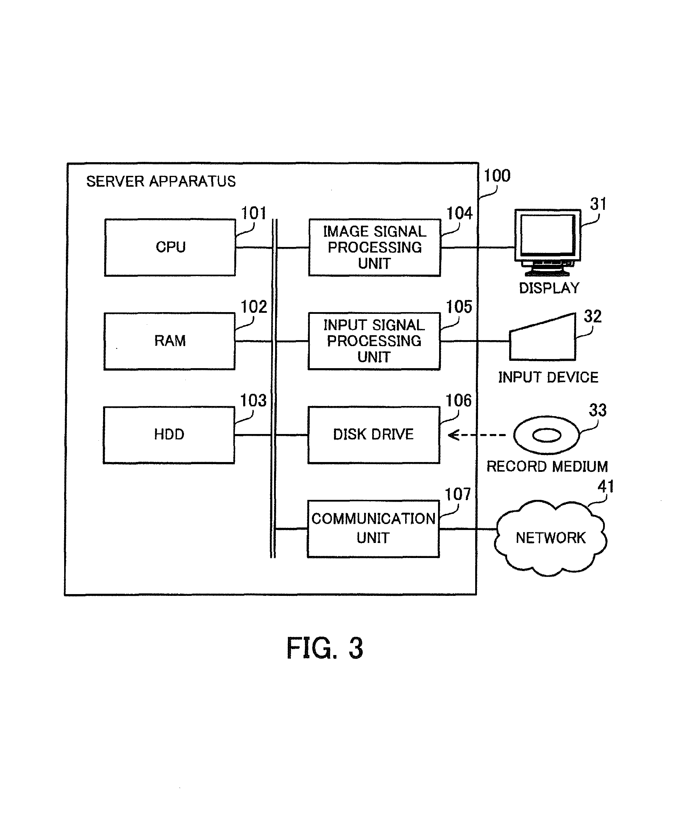

FIG. 3 is a block diagram of an example of hardware of the server apparatus. The server apparatus 100 includes a CPU 101, a RAM 102, a HDD 103, an image signal processing unit 104, an input signal processing unit 105, a disk drive 106, and a communication unit 107. These units are connected to a bus in the server apparatus 100. The server apparatus 100a, 100b, and 100c, the management apparatus 200, and the client apparatus 300 are also realized by the same hardware that is adopted in the server apparatus 100.

The CPU 101 is an operation unit which controls information processing on the server apparatus 100. The CPU 101 reads out at least a part of a program or data stored in the HDD 103, expands it in the RAM 102, and executes the program. The server apparatus 100 may include a plurality of operation units to perform distributed information processing.

The RAM 102 is a volatile memory which temporarily stores a program or data that the CPU 101 handles. The server apparatus 100 may include a memory which differs from a RAM in type, or include a plurality of memories.

The HDD 103 is a nonvolatile storage unit which stores programs, such as an OS (Operating System) program and application programs, and data used for information processing. The HDD 103 reads from or writes to a built-in magnetic disk in accordance with an instruction from the CPU 101. The server apparatus 100 may include a nonvolatile storage unit (such as a SSD (Solid State Drive)) other than a HDD or include a plurality of storage units.

In accordance with an instruction from the CPU 101, the image signal processing section 104 outputs an image to a display 31 connected to the server apparatus 100. A CRT (Cathode Ray Tube) display, a liquid crystal display, or the like is used as the display 31.

The input signal processing section 105 acquires an input signal from an input device 32 connected to the server apparatus 100, and outputs it to the CPU 101. A pointing device, such as a mouse or a touch panel, a keyboard, or the like is used as the input device 32.

The disk drive 106 is a drive unit which reads a program or data recorded on a record medium 33. A magnetic disk, such as a FD (Flexible Disk) or a HDD, an optical disk, such as a CD (Compact Disc) or a DVD (Digital Versatile Disc), a MO (Magneto-Optical disk), or the like is used as the record medium 33. For example, the disk drive 106 stores a program or data which it reads from the record medium 33 in the RAM 102 or the HDD 103 in accordance with an instruction from the CPU 101.

The communication unit 107 is a communication interface which is connected to the network 41 and which performs communication. The communication unit 107 may be connected to the network 41 by wire or radio. That is to say, the communication unit 107 may be a wired communication interface or a radio communication interface.

(Example of Request to Information Processing System)

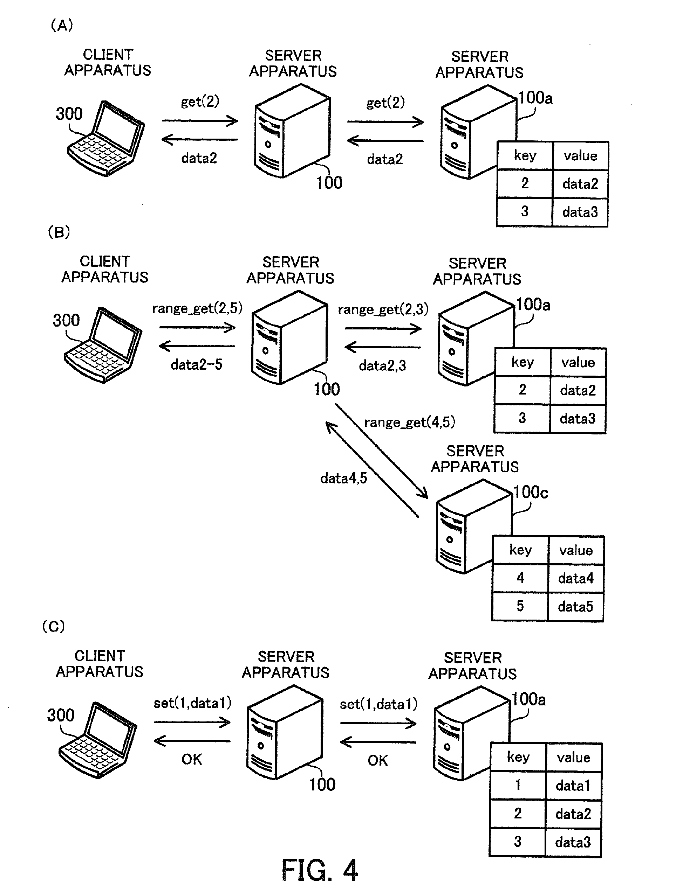

FIG. 4 illustrates an example of request handling. In FIG. 4, (A) read request in which a single key is designated, (B) read request in which a key range is designated, and (C) write request are taken as requests. It is assumed that the server apparatus 100a stores (2, data2) and (3, data3) as combinations of a key and data (key, value) and that the server apparatus 100c stores (4, data4) and (5, data5) as combinations of a key and data (key, value).

(A) When the server apparatus 100 receives from the client apparatus 300 a read request get (2) in which the key 2 is designated, the server apparatus 100 determines that the data corresponding to the key 2 is stored in the server apparatus 100a. The server apparatus 100 then transmits to the server apparatus 100a a message indicative of a read request for the key 2. The server apparatus 100a transmits data2 to the server apparatus 100. The server apparatus 100 transmits data2 to the client apparatus 300.

(B) When the server apparatus 100 receives from the client apparatus 300 a read request range_get(2, 5) in which the key range of 2 through 5 is designated, the server apparatus 100 determines that the data corresponding to the keys 2 and 3 is stored in the server apparatus 100a and that the data corresponding to the keys 4 and 5 is stored in the server apparatus 100c. The server apparatus 100 then transmits to the server apparatus 100a a message indicative of a read request for the keys 2 and 3 and transmits to the server apparatus 100c a message indicative of a read request for the keys 4 and 5. The server apparatus 100a transmits data2 and data3 to the server apparatus 100. The server apparatus 100c transmits data4 and data5 to the server apparatus 100. The server apparatus 100 transmits data2, data3, data4, and data5 to the client apparatus 300.

(C) When the server apparatus 100 receives from the client apparatus 300 a write request set (1, data1) in which the key 1 is designated, the server apparatus 100 determines that the data corresponding to the key 1 is to be stored in the server apparatus 100a. The server apparatus 100 then transmits to the server apparatus 100a a message indicative of a write request for the key 1. The server apparatus 100a writes data1 to its storage device and reports to the server apparatus 100 that the write has been completed. The server apparatus 100 reports to the client apparatus 300 that the write has been completed.

The process by the server apparatus 100 of determining from a key included in a request received from the client apparatus 300, for example, which server apparatus data corresponding to the key is stored in will be described later.

As has been described, each of the server apparatus 100, 100a, 100b, and 100c associates keys with data, holds them, and reads out data from or writes data to a storage device by the key. A key to be handled is designated by, for example, application software executed on the client apparatus 300. Accordingly, the complexity of data processing by the server apparatus 100, 100a, 100b, or 100c is decreased and the load on the server apparatus 100, 100a, 100b, or 100c is reduced.

If data corresponding to a key designated in a write request does not reside, then the write request means to add the data. On the other hand, if data corresponding to a key designated in a write request already resides, then the write request means to overwrite the data. For example, application software executed on the client apparatus 300 is responsible for checking whether or not data corresponding to a key resides or determining whether or not overwrite is allowed. For example, the information processing system according to the second embodiment is used for managing data (log data, for example) for which time is considered as a key.

(Example of Segment Management Tree)

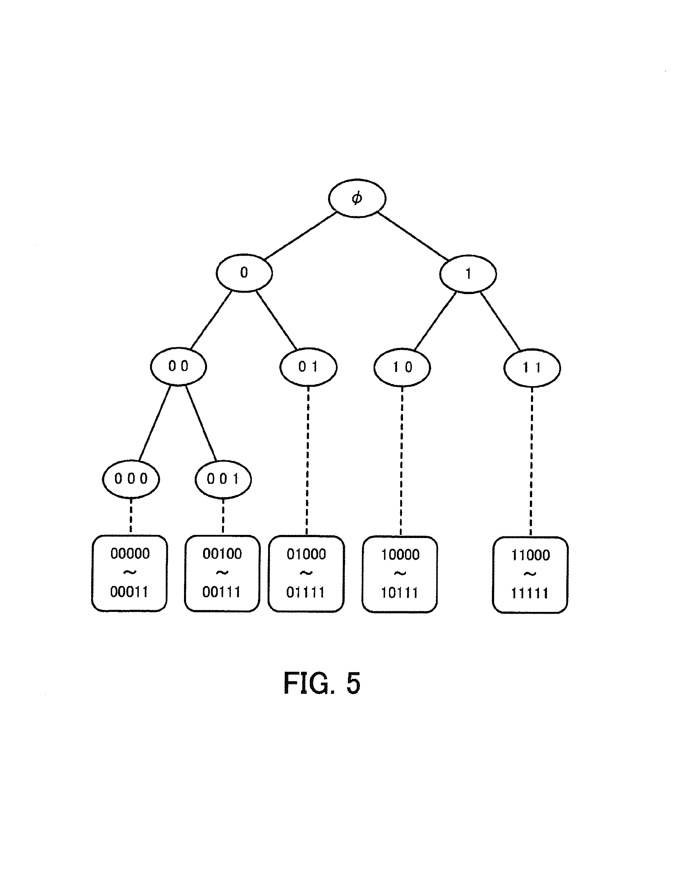

FIG. 5 illustrates an example of a segment management tree. Each of the server apparatus 100, 100a, 100b, and 100c has segment information in which a segment management tree is described. An ordered tree referred to as a Trie tree or a prefix tree is used as a segment management tree. A PHT stated in the above NPTL1 (Yatin Chawathe, Sriram Ramabhadran, Silvia Ratnasamy, Anthony LaMarca, Scott Shenker and Joseph Hellerstein, "A Case Study in Building Layered DHT Applications") may be used.

With a segment management tree key space is hierarchically divided into intervals referred to as segments. Each node of a segment management tree corresponds to a segment. A label whose length corresponds to the depth of a node is given to the node. For example, the label "0" is given to a child node on the left side of a root node and the label "1" is given to a child node on the right side of the root node. In addition, when the label "L" is given to a node, the label "L+0" is given to a child node on the left side of the node and the label "L+1" is given to a child node on the right side of the node. Each key in the key space is associated with a leaf node (which has no child node) to which a label that matches its prefix is given.

For example, it is assumed that a key is represented by a 5-bit binary number. If a key designated by the client apparatus 300 is not represented by a binary number, then the key is converted to a binary number. Furthermore, as illustrated in FIG. 5, it is assumed that a segment management tree includes five leaf nodes to which the labels "000", "001", "01", "10", and "11" are given. In this case, the keys 00000 through 00011 are associated with the node to which the label "000" is given. The keys 00100 through 00111 are associated with the node to which the label "001" is given. The keys 01000 through 01111 are associated with the node to which the label "01" is given. The keys 10000 through 10111 are associated with the node to which the label "10" is given. The keys 11000 through 11111 are associated with the node to which the label "11" is given.

Data which belongs to segments corresponding to the leaf nodes of the segment management tree is stored in storage units (HDD 103 illustrated in FIG. 3, for example) in the server apparatus 100, 100a, 100b, and 100c. A server apparatus including a storage unit which stores data that belongs to a segment is determined on the basis of, for example, a hash value calculated by applying a hash function to a label of the segment.

By determining in this way on a segment basis a server apparatus in which data is arranged, key locality is maintained and data associated with keys whose values are close to one another is arranged as much as possible in the same server apparatus. Accordingly, range-designated data processing, such as a range-designated read request, is efficiently performed. The depth (hierarchical level) of the segment management tree is dynamically adjusted according to the amount of data stored in the server apparatus 100, 100a, 100b, or 100c. As described later, a segment to which a large amount of data belongs is dynamically divided further into plural segments.

In the above description a binary tree is used as an example of a segment management tree. However, a tree in which each node has any number of branches may be used. If each node other than a leaf node has b (b is an integer greater than or equal to 2) child nodes, then a label represented as a b-ary number is given to each node. For example, if b=3, then a root node has child nodes whose labels are "0", "1", and "2". In addition, the node whose label is "0" has child nodes whose labels are "00", "01", and "02". To associate a key with a segment, the key is converted to a b-ary number and a prefix of the key and a label are compared.

(Example of Method for Arranging Data in Plurality of Server Apparatus)

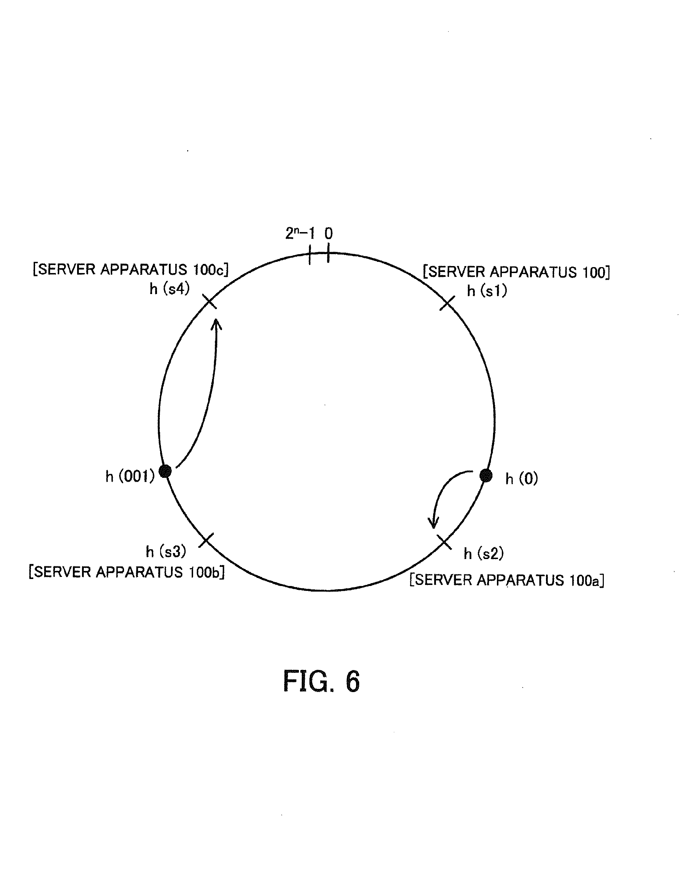

FIG. 6 illustrates an example of a method for arranging in a server apparatus data which belongs to a segment. As stated above, data which belongs to a segment corresponding to a leaf node of a segment management tree is arranged in one of the server apparatus 100, 100a, 100b, and 100c according to a label of the segment.

It is assumed that a value area (area within which a hash value falls) of a hash function is 0 to $2^n-1$ (n is a natural number), and that hash value space is formed by looping the value area. Each of the server apparatus 100, 100a, 100b, and 100c calculates a hash value corresponding thereto by applying the hash function to its identification information (address, for example). In addition, each of the server apparatus 100, 100a, 100b, and 100c calculates a hash value corresponding to a segment by applying the hash function to a label of the segment or another label obtained by converting the label by a conversion method described later. Each of the server apparatus 100, 100a, 100b, and 100c then determines a server apparatus in which data that belongs to the segment is arranged on the basis of the relative positions of a hash value of each server apparatus and the hash value of the segment on a loop. For example, a server apparatus whose hash value resides ahead of the hash value of the segment on the loop and whose hash value is the smallest is selected.

For example, it is assumed that a hash value of the server apparatus 100 is h(s1), that a hash value of the server apparatus 100a is h(s2), and that a hash value of the label "0" is h(0). If h(s2) > h(0) > h(s1), then a segment whose label is "0" is associated with the server apparatus 100a. Furthermore, it is assumed that a hash value of the server apparatus 100b is h(s3), that a hash value of the server apparatus 100c is h(s4), and that a hash value of the label "001" is h(001). If h(s4) > h(001) > h(s3), then a segment whose label is "001" is associated with the server apparatus 100c.

However, a method for arranging a segment in the server apparatus 100, 100a, 100b, or 100c is not limited to the above method. For example, the server apparatus selection method of finding a remainder by dividing a hash value calculated from a label of a segment by the number of server apparatus and arranging the segment according to the remainder may be adopted. For example, a hash value is divided by 4. If a remainder is 0, then the server apparatus 100 is selected. If a remainder is 1, then the server apparatus 100a is selected. If a remainder is 2, then the server apparatus 100b is selected. If a remainder is 3, then the server apparatus 100c is selected.

(Example of Software of Server Apparatus)

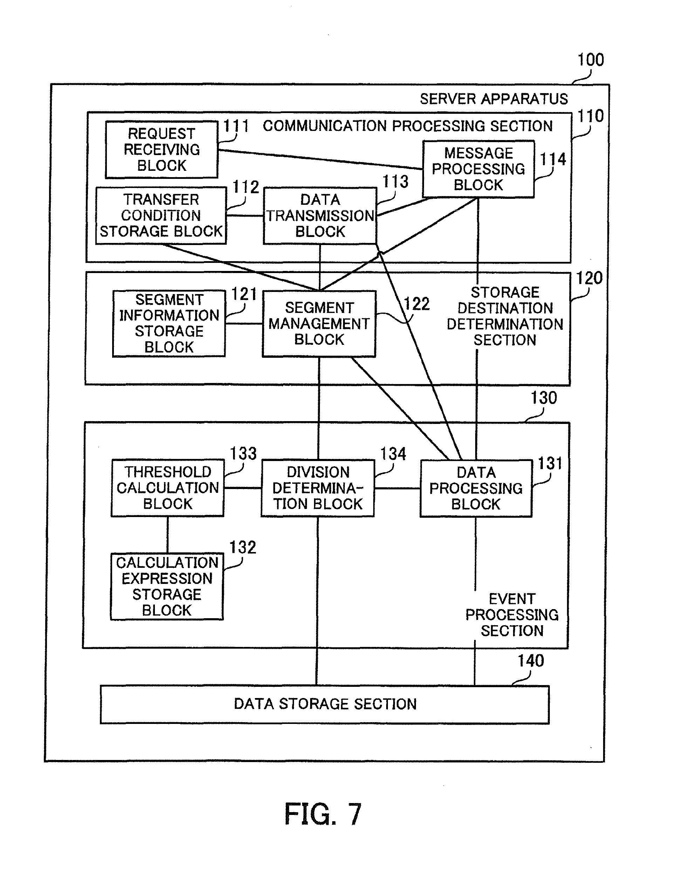

FIG. 7 is a block diagram of an example of software of the server apparatus.

The server apparatus 100 includes a communication processing section 110, a storage destination determination section 120, an event processing section 130, and a data storage section 140. The communication processing section 110, the storage destination determination section 120, and the event processing section 130 are realized as programs executed by the use of, for example, the CPU 101 and the RAM 102 illustrated in FIG. 3. The data storage section 140 is realized as a storage area on, for example, the RAM 102 or the HDD 103 illustrated in FIG. 3. The server apparatus 100a, 100b, and 100c illustrated in FIG. 2 are also realized by the same structure that is adopted in the server apparatus 100.

The communication processing section 110 includes a request receiving block 111, a transfer condition storage block 112, a data transmission block 113, and a message processing block 114.

When the request receiving block 111 receives a request from the client apparatus 300 illustrated in FIG. 2, the request receiving block 111 informs the message processing block 114 of the request. Furthermore, the request receiving block 111 acquires from the message processing block 114 data read out from the data storage section 140 or the result of writing to the data storage section 140, and transmits it to the client apparatus 300 as a response.

The transfer condition storage block 112 stores information indicative of a transfer condition on the basis of which whether to transfer data which belongs to segments after division from a server apparatus which stores the data to another server apparatus is determined at the time of a segment division process described later. Hierarchical level intervals at which the transfer of data which belongs to segments generated by hierarchically dividing a segment in the segment management tree illustrated in FIG. 5, for example, is allowed are specified in the transfer condition. It may safely be said that generation intervals at which the transfer of data which belongs to descendant nodes of a node (segment) is allowed are specified in the transfer condition. The transfer condition storage block 112 is realized as a storage area on, for example, the RAM 102 or the HDD 103 illustrated in FIG. 3.

The data transmission block 113 refers to a transfer condition stored in the transfer condition storage block 112 at the time of a segment division process. If data which belongs to segments after division is stored in the data storage section 140, then the data transmission block 113 determines on the basis of the transfer condition whether to transfer data which belongs to at least one of the segments after the division to another server apparatus. Furthermore, when the data transmission block 113 determines to transfer data which belongs to at least one of the segments after the division, the data transmission block 113 inquires of the storage destination determination section 120 a server apparatus which is a storage destination of data which belongs to each segment after the division. If a server apparatus designated by the storage destination determination section 120 is not the server apparatus 100, then the data transmission block 113 requests data to be transmitted of a data processing block 131 and receives the data. The data transmission block 113 then transmits the data to the server apparatus determined by the storage destination determination section 120.

The message processing block 114 transmits a message to or receives a message from another server apparatus (server apparatus 100a, 100b, or 100c). When the message processing block 114 receives a read request message or a write request message from another server apparatus, the message processing block 114 requests the event processing section 130 to perform data processing. In addition, when a segment division process or the like occurs, the message processing block 114 transmits a segment update message to another server apparatus in response to a request from a segment management block 122. Furthermore, when the message processing block 114 receives a segment update message from another server apparatus, the message processing block 114 requests the segment management block 122 to update segment information. Moreover, the message processing block 114 accepts a request from the client apparatus 300 received by the request receiving block 111. If the request is a write request, then the message processing block 114 passes a key included in the request to the storage destination determination section 120 and inquires of the storage destination determination section 120 a server apparatus to which data is to be written. If a storage destination server apparatus is the server apparatus 100, then the message processing block 114 stores the data in the data storage section 140 via the event processing section 130. If a storage destination server apparatus is a server apparatus other than the server apparatus 100, then the message processing block 114 transfers the request to the server apparatus. If the request is a read request, then the message processing block 114 passes a key included in the request to the storage destination determination section 120 and inquires of the storage destination determination section 120 a server apparatus in which data resides. If a storage destination server apparatus is the server apparatus 100, then the message processing block 114 retrieves the data from the data storage section 140 via the event processing section 130. If a storage destination server apparatus is a server apparatus other than the server apparatus 100, then the message processing block 114 transfers the request to the server apparatus.

The storage destination determination section 120 includes a segment information storage block 121 and a segment management block 122.

The segment information storage block 121 stores segment information in which a segment management tree like that illustrated in FIG. 5 is described. When a segment is divided, the segment information is updated. The segment information storage block 121 may store information indicative of a hash function. The segment information storage block 121 is realized as a storage area on the RAM 102 or the HDD 103.

On the basis of segment information stored in the segment information storage block 121, the segment management block 122 searches for one or more segments corresponding to a key or a key range designated in a request. The segment management block 122 then determines one or more server apparatus in which data that belongs to the segments for which the segment management block 122 searches is arranged from labels of the segments or labels obtained by making a conversion by the use of a method described later and a hash function. Furthermore, if the data that belongs to the segments for which the segment management block 122 searches resides in the server apparatus 100, then the segment management block 122 requests the event processing section 130 to process the data. If the data that belongs to the segments for which the segment management block 122 searches resides in a server apparatus other than the server apparatus 100, then the segment management block 122 requests the message processing block 114 to transmit a message to the server apparatus.

In addition, when the event processing section 130 reports segment division to the segment management block 122, the segment management block 122 updates segment information stored in the segment information storage block 121. The segment management block 122 then requests the message processing block 114 to transmit a message indicative of segment information update to the other server apparatus. Furthermore, the segment management block 122 updates the segment information stored in the segment information storage block 121 in response to a request from the message processing block 114. The segment management block 122 receives identification information for a server apparatus in which a segment may be arranged from the management apparatus 200 as setting information, and holds the identification information.

The event processing section 130 includes the data processing block 131, a calculation expression storage block 132, a threshold calculation block 133, and a division determination block 134.

The data processing block 131 processes data in response to a request from the segment management block 122 or the message processing block 114. If a read request in which a key or a key range is designated is made, then the data processing block 131 reads out from the data storage section 140 data corresponding to the key or a data group corresponding to the key range. If a write request in which a key is designated is made, then the data processing block 131 associates data with the key and writes the data to the data storage section 140.

Furthermore, if the data processing block 131 writes data to the data storage section 140, the data processing block 131 inquires of the division determination unit 134 whether or not there is a need to divide a segment. If the division determination block 134 determines that there is a need to divide the segment, then the data processing block 131 divides the segment and reports the division of the segment to the segment management block 122. In addition, the data processing block 131 transmits to the data transmission block 113 data which belongs to one or more segments of segments after the division in response to a request from the data transmission block 113.

The calculation expression storage block 132 stores calculation expressions by which a threshold for determining whether or not there is a need to divide a segment is calculated. As described later, the threshold is calculated on the basis of a label of the segment for which whether or not there is a need of division is determined. The threshold calculation expressions are described by, for example, a user of the management apparatus 200 and are set in the calculation expression storage block 132 by the management apparatus 200. The calculation expression storage block 132 is realized as a storage area on, for example, the RAM 102 or the HDD 103 illustrated in FIG. 3.

The threshold calculation block 133 calculates, from a label of a segment designated by the division determination block 134 and threshold calculation expressions stored in the calculation expression storage block 132, a threshold for the designated segment. The threshold calculation block 133 then returns the calculated threshold to the division determination block 134.

The division determination block 134 determines in response to an inquiry from the data processing block 131 whether or not there is a need to divide a segment to which data has been written. The division determination block 134 designates a label of the segment to which the data has been written, and requests the threshold calculation block 133 to calculate a threshold. For example, the division determination block 134 refers to segment information and finds the label of the segment from a key designated in a write request. Furthermore, the division determination block 134 refers to the data storage section 140 and finds the amount of or the number of pieces of data which belongs to the segment which has been written (total amount or total number of pieces of data associated with keys which belong to the segment, for example). If the amount of or the number of pieces of the data is larger than the threshold, then the division determination block 134 determines that there is a need to divide the segment. If the amount of or the number of pieces of the data is smaller than or equal to the threshold, then the division determination block 134 determines that there is no need to divide the segment.

The division determination block 134 may periodically check the amount of or the number of pieces of data which belongs to each segment, and determine that there is a need of division of a segment for which the amount of or the number of pieces of data is larger than a threshold.

The data storage section 140 associates keys with data and stores them. The data storage section 140 may divide a storage area according to segments and store keys and data.

(Segment Division Process)

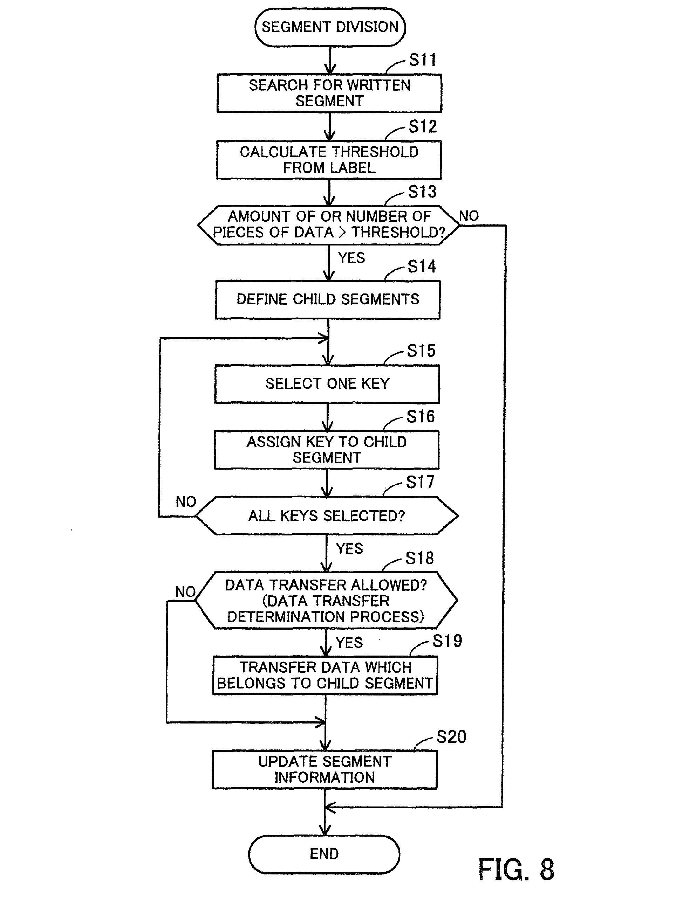

FIG. 8 is a flow chart of an example of segment division. It is assumed that the server apparatus 100 performs a segment division process. The server apparatus 100a, 100b, and 100c also perform the same segment division process that the server apparatus 100 performs. A process indicated in FIG. 8 will now be described in order of step number.

(Step S11) The division determination block 134 specifies a key of data which the data processing block 131 writes to the data storage section 140. The division determination block 134 then searches for a segment corresponding to the key on the basis of segment information stored in the segment information storage block 121.

(Step S12) The threshold calculation block 133 substitutes a label of the segment for which the division determination block 134 searches in step S11 in calculation expressions stored in the calculation expression storage block 132 to calculate a threshold for the segment. For example, the threshold calculation expressions are expressed as follows:

$$\text{threshold } th(L) = R \times 2^{(\text{decimal part of } (f \times N))} \qquad (1)$$

where $th(L)$ indicates a threshold applied to a segment whose label is $L$, $R$ indicates a determined root threshold, and $N$ indicates the above hierarchical level interval at which transfer is allowed.

$$f = \text{value}(L)/b^{\text{length}(L)} \qquad (2)$$

where $b$ indicates the number of branches in a segment management tree, $\text{length}(L)$ indicates the number of bits of a label, and $\text{value}(L)$ indicates a decimal number as which a binary number represented by the label $L$ is represented.

(Step S13) The division determination block 134 refers to the data storage section 140 and calculates the amount of data (total amount of data associated with keys which belong to the segment, for example) or the number of pieces of data which belongs to the segment for which the division determination block 134 searches in step S11. The division determination block 134 then determines whether or not the amount of or the number of pieces of the data is larger than the threshold calculated in step S12. If the amount of or the number of pieces of the data is larger than the threshold, then step S14 is performed. If the amount of or the number of pieces of the data is smaller than or equal to the threshold, then the process ends.

(Step S14) The segment management block 122 defines b child segments obtained by dividing the segment for which the division determination block 134 searches in step S11. For example, if a label of the segment is $L$ and b=2, then the segment management block 122 defines child segments whose labels are (L+0) and (L+1).

(Step S15) The data processing block 131 selects from the data storage section 140 one key which belongs to the segment for which the division determination block 134 searches in step S11.

(Step S16) The data processing block 131 specifies a child segment, of the child segments defined in step S14, whose label matches a prefix of the key selected in step S15. The data processing block 131 then assigns the key selected in step S15 to the specified child segment.

(Step S17) The data processing block 131 determines whether or not it has selected all keys in step S15. If all the keys are selected, then step S18 is performed. If there is a key which is not yet selected, then the process is repeated from step S15.

(Step S18) The data transmission block 113 determines whether to allow the transfer of data which belongs to one of the plural child segments to another server apparatus (data transfer determination process). An example of a data transfer determination process will be described later. If the data transmission block 113 determines to allow data transfer, then step S19 is performed. If the data transmission block 113 determines not to allow data transfer, then step S20 is performed.

(Step S19) The data transmission block 113 reads out from the data storage section 140 via the data processing block 131 data which belongs to the child segment (which is associated with a key that belongs to the child segment) and which is to be arranged in another server apparatus, and transmits the data to another server apparatus. When the transmission of the data is completed, the data transmission block 113 informs the data processing block 131 that the transmission of the data is completed. When the data processing block 131 is informed by the data transmission block 113 that the transmission of the data is completed, the data processing block 131 deletes from the data storage section 140 the data which belongs to the child segment and which is arranged in another server apparatus.

(Step S20) The segment management block 122 updates the segment information stored in the segment information storage block 121 so as to make the segment division performed in step S14 reflect. The message processing block 114 informs all of the other server apparatus of segment update.

In the above segment division process, the division of a written segment is taken as an example. However, a segment division process may be performed according to a result obtained by periodically comparing the amount of or the number of pieces of data which belongs to each segment at the current lowest hierarchical level of a segment management tree with a threshold.

Furthermore, in the above segment division process, a threshold is calculated from a label of a written segment for which a search is made, and the calculated threshold is used in step S13. However, another method may be used. For example, the threshold calculation block 133 may calculate a threshold at a stage at which each segment has been generated, and store it in a storage block (segment information storage block 121, for example). In that case, the division determination block 134 retrieves from the storage block a threshold corresponding to a segment for which the division determination block 134 searches in step S11, and uses the threshold in step S13. In addition, the same threshold may be used for all segments.

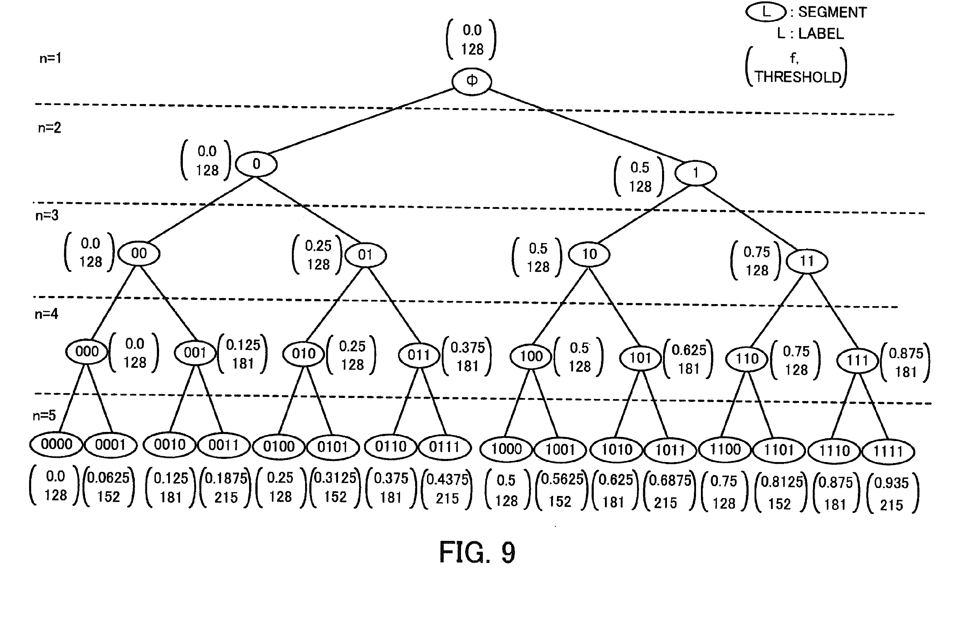

FIG. 9 indicates an example of a threshold for a segment. Each threshold indicated in FIG. 9 is calculated by applying expression (1) to the segment management tree of FIG. 5 represented as a binary tree.

In the example of FIG. 9, however, it is assumed that root threshold R = 128 (MB) and that (hierarchical level interval N at which transfer is allowed) = 4.

Root threshold R = 128 is set for a segment corresponding to a leftmost node (root node (whose label is "Φ") or a node whose label is "0", "00", "000", or "0000"). at each hierarchical level (n = 1 to 5). Thresholds obtained by multiplying 128 by $2^{(\text{decimal part of } (f \times N))}$ are set for segments corresponding to nodes other than the leftmost nodes.

With a segment whose label is "1", for example, f = 0.5 is obtained from the above expression (2). In expression (1), f x N = 0.5 x 4 = 2.0. Its decimal part is 0, so threshold th("1") = 128 x 2° = 128 (MB).

Furthermore, with a segment whose label is "111", $f = 7/2^3 = 0.875$ is obtained from the above expression (2). In expression (1), f x N = 0.875 x 4 = 3.5. Its decimal part is 0.5, so threshold the("111") = 128 x $2^{0.5} \approx 181$ (MB).

FIG. 9 also indicates thresholds and the values of f for the other segments calculated on the basis of expressions (1) and (2).

By calculating a threshold on the basis of expression (1), timing at which segments that belong to a hierarchical level at which transfer may occur at the time of division are divided can be staggered. In the segment management tree illustrated in FIG. 9, (hierarchical level interval N at which transfer is allowed) = 4. Accordingly, when the segment with the label "000", a segment with the label "001", or the like which belong to a hierarchical level corresponding to n=4 is divided, transfer may occur (details will be described later). A threshold associated with the segment with the label "000" is 128 (MB) and a threshold associated with the segment with the label "001" is 181 (MB). If data is uniformly added to the entire key space at a constant speed and these thresholds are applied, then the timing at which the segment with the label "001" is divided becomes later than the timing at which the segment with the label "000" is divided.

Furthermore, if data is uniformly added to the key space and a threshold for each segment is calculated by the use of expression (1), then a segment which belongs to a lower hierarchical level is divided after the division of a segment which belongs to an upper hierarchical level is completed. For example, after the segment whose label is "1" is divided, the segment whose label is "00" is divided. After a segment whose label is "11" is divided, the segment whose label is "000" is divided. After the segment whose label is "111" is divided, the segment whose label is "0000" is divided.

(Data Transfer Determination Process)

An example of step S18 (data transfer determination process) of the flow chart indicated in FIG. 8 will be described.

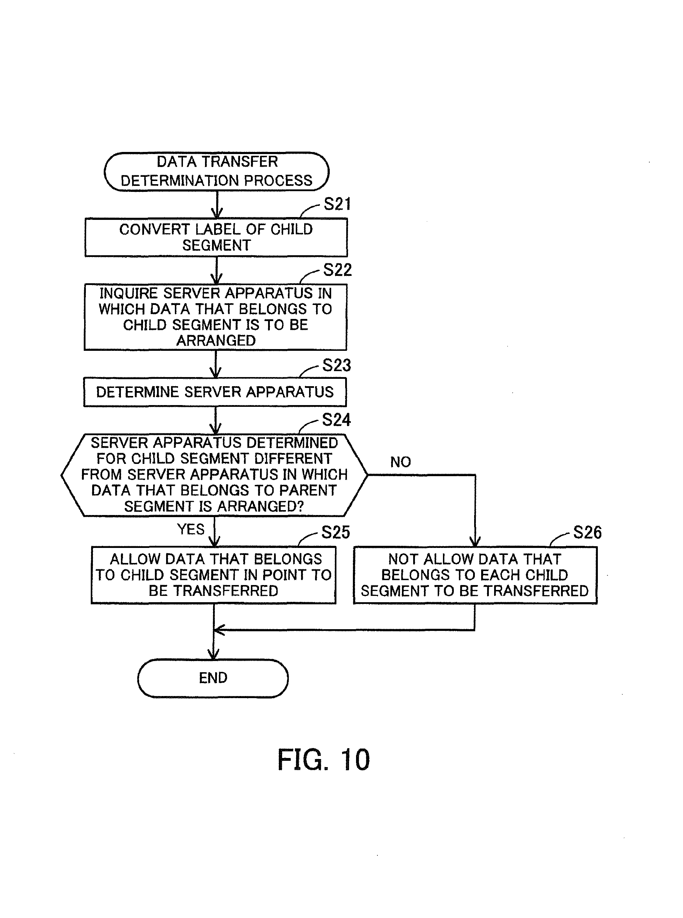

FIG. 10 is a flow chart of an example of the data transfer determination process. It is assumed that the server apparatus 100 performs the data transfer determination process. The server apparatus 100a, 100b, and 100c also perform the same data transfer determination process that the server apparatus 100 performs. A process indicated in FIG. 10 will now be described in order of step number.

(Step S21) The data transmission block 113 converts in the following way a label of a child segment defined in step S14 of the flow chart indicated in FIG. 8. For example, the following two conversion techniques are known.

(Label Conversion Method 1)

The data transmission block 113 refers to a hierarchical level interval N at which transfer is allowed. The hierarchical interval level N at which transfer is allowed is stored in the transfer condition storage block 112. For example, the data transmission block 113 then leaves only bits, from the head of a label of a segment represented as a binary number, the number of which is a multiple of N, and deletes bits the number of which is not a multiple of N.

For example, it is assumed that N=4. If this label conversion method is applied to the segment management tree illustrated in FIG. 9, then all bits of a label of each segment which belongs to a hierarchical level corresponding to n=1, 2, 3, or 4 are deleted and all bits of a label of each segment which belongs to a hierarchical level corresponding to n=5 are left.

Furthermore, if consecutive bits of a label from the LSB (Least Significant Bit) to the MSB (Most Significant Bit) the number of which corresponds to a multiple of N are 0, then the data transmission block 113 deletes the consecutive 0's the number of which corresponds to the multiple of N.

For example, it is assumed that N=4. The label "11110000" is converted to the label "1111" and the label "10100000000" is converted to the label "101".

(Label Conversion Method 2)

The data transmission block 113 applies expression (2) to a label of a segment represented as, for example, a binary number to find the value of f. The data transmission block 113 may acquire and use the value of f found in the threshold calculation process (performed in step S12 of FIG. 8).

If a remainder (A) obtained by dividing the number of bits of the label by N matches an integral part of (f x N), then the data transmission block 113 maintains a label value. If a remainder (A) obtained by dividing the number of bits of the label by N does not match an integral part of (f x N), then the data transmission block 113 deletes A bits from the label from the LSB to the MSB.

Furthermore, if consecutive bits of a label from the LSB to the MSB the number of which corresponds to a multiple of N are 0, then the data transmission block 113 deletes the consecutive 0's the number of which corresponds to the multiple of N. This is the same with label conversion method 1.

(Step S22) The data transmission block 113 applies one of the above two label conversion methods. After that, the data transmission block 113 informs the segment management block 122 of the label or a label after the conversion of the child segment and inquires of the segment management block 122 a server apparatus in which data that belongs to the child segment is to be arranged.

(Step S23) The segment management block 122 applies a hash function to the label or the label after the conversion of the child segment to calculate a hash value corresponding to the child segment. As illustrated in FIG. 6, the segment management block 122 then determines a server apparatus in which the data that belongs to the child segment is to be arranged on the basis of the relative positions of a hash value of each server apparatus and a hash value of each segment on a loop. In addition, the segment management block 122 informs the data transmission block 113 of the determined server apparatus.

(Step S24) The data transmission block 113 determines whether or not the determined server apparatus is different from a server apparatus which is determined in advance by the same steps as steps S21 and S22 and in which data that belongs to the parent segment is arranged. If any of server apparatus determined for the plural child segments is different from the server apparatus in which the data that belongs to the parent segment is arranged, then step S25 is performed. If all server apparatus determined for the plural child segments are the same as the server apparatus in which the data that belongs to the parent segment is arranged, then step S26 is performed.

(Step S25) The data transmission block 113 allows data that belongs to a child segment for which a server apparatus different from the server apparatus associated with the parent segment is designated to be transferred from the server apparatus associated with the parent segment to a designated server apparatus.

(Step S26) The data transmission block 113 does not allow data that belongs to each child segment to be transferred from the server apparatus associated with the parent segment to another server apparatus.

(Example of Application of Label Conversion Method 1)

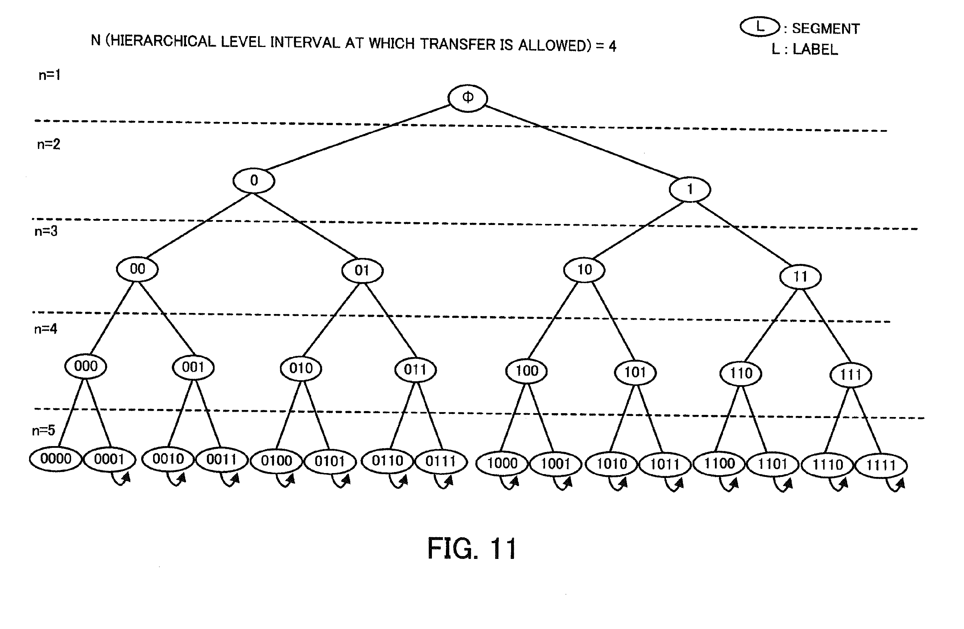

FIG. 11 indicates an example of a segment for which transfer is allowed in the case of label conversion method 1 being applied. A segment management tree illustrated in FIG. 11 is the same as that illustrated in FIG. 9.

In the following description it is assumed that data that belongs to a segment at a hierarchical level corresponding to n=1 is stored in the data storage section 150 of the server apparatus 100. An arrow added to a segment indicates that data which belongs to the segment is allowed to be transferred from the server apparatus 100 to another server apparatus.

It is assumed that a hierarchical level interval N at which transfer is allowed is 4. As stated above, if the above label conversion method 1 is applied, all bits of a label of each segment which belongs to a hierarchical level corresponding to n=1, 2, 3, or 4 are deleted and a hash value is calculated. As a result, the same hash value is obtained. Accordingly, the segment management block 122 informs the data transmission block 113 of the same server apparatus 100 as a transfer destination. This means that data that belongs to each segment which belongs to a hierarchical level corresponding to n=1, 2, 3, or 4 is not moved.

With a segment which belongs to a hierarchical level corresponding to n=5 and whose label is "0000", all 0's are deleted by applying the above label conversion method 1. Accordingly, the same server apparatus 100 is designated. With the other segments which belong to the hierarchical level corresponding to n=5, the segment management block 122 designates a transfer destination server apparatus according to a label value of each segment. However, the segment management block 122 may designate the same server apparatus 100 for a segment, depending on the number of server apparatus or the like. In that case, the data transmission block 113 does not transfer data which belongs to the segment from the server apparatus 100 to another server apparatus.

It is assumed that N=4 and that label conversion method 1 is applied. When segments are divided further in the segment management tree illustrated in FIG. 11, segments for which transfer is allowed appear at hierarchical level intervals of 4.

As has been described, if label conversion method 1 is applied and determined division depth (hierarchical level interval) is not satisfied, the movement of data which belongs to generated segments to another storage device is restricted. This checks an increase in the average amount of data transferred at the time of distributing a load in the information processing system. Therefore, the movement of data from one storage device to another at load distribution time does not impede, for example, access by a user to data in the information processing system.

(Example of Application of Label Conversion Method 2)

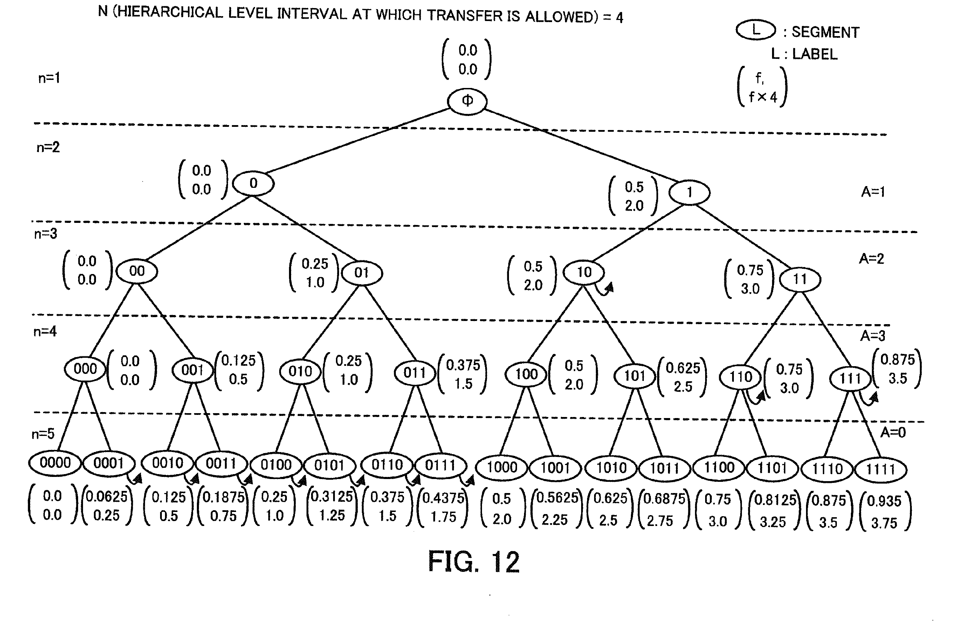

FIG. 12 indicates an example of a segment for which transfer is allowed in the case of label conversion method 2 being applied. A segment management tree illustrated in FIG. 12 is the same as that illustrated in FIG. 9.

In the following description it is assumed that data that belongs to a segment at a hierarchical level corresponding to n=1 is stored in the data storage section 150 of the server apparatus 100. This is the same with the example of application of label conversion method 1. Furthermore, an arrow added to a segment indicates that data which belongs to the segment is allowed to be transferred from the server apparatus 100 to another server apparatus.

It is assumed that a hierarchical level interval N at which transfer is allowed is 4 and that the above label conversion method 2 is applied. With a segment which belongs to a hierarchical level corresponding to n=2 and whose label is "0", the number of bits of the label is 1, a remainder (A) obtained by dividing the number of the bit of the label by N(=4) is 1, and (f x N) = 0.0. In this case, the remainder (A)(=1) does not match an integral part of (f x N)(=0.0), so one bit is deleted from the label from the LSB to the MSB. As a result, all the bits of the label are deleted. Accordingly, a hash value is the same with a segment which belongs to a hierarchical level corresponding to n=1. The segment management block 122 informs the data transmission block 113 of the server apparatus 100 as a transfer destination. This means that data which belongs to the segment whose label is "0" is not moved. This is the same with a segment whose label is "1". That is to say, a hash value is the same with the segment which belongs to the hierarchical level corresponding to n=1. The segment management block 122 informs the data transmission block 113 of the server apparatus 100 as a transfer destination. This means that data which belongs to the segment whose label is "1" is not moved.

With each segment which belongs to a hierarchical level corresponding to n=3, the number of bits of a label is 2 and a remainder (A) obtained by dividing the number of the bits of the label by N(=4) is 2. With a segment whose label is "10", an integral part of (f x 4) matches 2. Accordingly, the data transmission block 113 informs the segment management block 122 of the label "10". The segment management block 122 finds a hash value corresponding to the label "10", determines on the basis of the hash value a server apparatus to which data that belongs to the segment whose label is "10" is to be transferred, and informs the data transmission block 113 of the server apparatus. If the server apparatus of which the segment management block 122 informs the data transmission block 113 is different from the server apparatus 100, then the data transmission block 113 transfers the data that belongs to the segment whose label is "10" to the server apparatus of which the segment management block 122 informs the data transmission block 113.

With the other segments which belong to the hierarchical level corresponding to n=3, data corresponding to bits the number of which is equal to a remainder (A) is deleted by applying label conversion method 2. As a result, hash values are the same with the segment which belongs to the hierarchical level corresponding to n=1. Accordingly, the segment management block 122 informs the data transmission block 113 of the server apparatus 100 as a transfer destination. This means that data which belongs to these segments is not moved.

With each segment which belongs to a hierarchical level corresponding to n=4, the number of bits of a label is 3 and a remainder (A) obtained by dividing the number of the bits of the label by N(=4) is 3. With a segment whose label is "110" or "111", an integral part of (f x 4) matches 3. Accordingly, the data transmission block 113 informs the segment management block 122 of the label "110" or "111". The segment management block 122 finds a hash value corresponding to the label "110" or "111", determines on the basis of the hash value a server apparatus to which data that belongs to the segment whose label is "110" or "111" is to be transferred, and informs the data transmission block 113 of the server apparatus. If the server apparatus of which the segment management block 122 informs the data transmission block 113 is different from the server apparatus 100, then the data transmission block 113 transfers the data that belongs to the segment whose label is "110" or "111" to the server apparatus of which the segment management block 122 informs the data transmission block 113.

With the other segments which belong to the hierarchical level corresponding to n=4, data corresponding to bits the number of which is equal to a remainder (A) is deleted by applying label conversion method 2. As a result, hash values are the same with the segment which belongs to the hierarchical level corresponding to n=1. Accordingly, the segment management block 122 informs the data transmission block 113 of the server apparatus 100 as a transfer destination. This means that data which belongs to these segments is not moved.

With each segment which belongs to a hierarchical level corresponding to n=5, the number of bits of a label is 4 and a remainder (A) obtained by dividing the number of the bits of the label by N(=4) is 0. With segments whose labels are "0000" through "0011", an integral part of (f x 4) matches 0. However, the label "0000" includes consecutive 0's from the LSB to the MSB the number of which is a multiple of N (once N), so the consecutive 0's are deleted. With the labels "0100" through "0111", a remainder (A) is 0, so no bit is deleted. Accordingly, the data transmission block 113 informs the segment management block 122 of the label "(empty)" through "0111". The segment management block 122 finds hash values corresponding to the label "empty" through "0111", determines on the basis of the hash values server apparatus to which data that belongs to the segments whose labels are "empty" through "0111" is to be transferred, and informs the data transmission block 113 of the server apparatus. The hash value corresponding to the label "empty" is the same with the segment which belongs to the hierarchical level corresponding to n=1, so the server apparatus 100 is designated. If the server apparatus of which the segment management block 122 informs the data transmission block 113 as transfer destinations of the data that belongs to the segments whose labels are "0001" through "0111" are different from the server apparatus 100, then the data transmission block 113 transfers the data that belongs to these segments to the server apparatus of which the segment management block 122 informs the data transmission block 113.

With segments whose labels are "1000" through "1111", a remainder (A) is also 0, so no bit is deleted from a label value. However, if transfer occurs for the segment whose label is "10", "110" or "111", the segments whose labels are "1000" through "1111" do not meet the division depth condition. That is to say, an interval between the hierarchical level to which the segment whose label is "10", "110" or "111" belongs and the hierarchical level to which the segments whose labels are "1000" through "1111" belong is smaller than N(=4). Accordingly, the data transmission block 113 does not allow data which belongs to these segments to be moved. When segment division is performed further, descendant segments of the segment whose label is "10", "110" or "111" are generated. As a result, segments for which the movement of data is allowed appear at hierarchical level intervals of 4. The same applies to descendant segments of the segments whose labels are "0001" through "0111".

As has been described, in the example of FIG. 12, segments for which the transfer of data is allowed do not appear only at one hierarchical level of the segment management tree. That is to say, segments for which the transfer of data is allowed appear at plural hierarchical levels.

If label conversion method 2 is applied in the above way, the same effect that is obtained by applying label conversion method 1 is achieved. In addition, timing at which a data transfer occurs for plural segments can be staggered. That is to say, it is possible to prevent data transfers from occurring in the same period of time. Therefore, the load on the information processing system is reduced.

The server apparatus 100a, 100b, or 100c illustrated in FIG. 2 can also perform the above data transfer determination process in the same way by the use of segment information which it has.

(Request Handling)

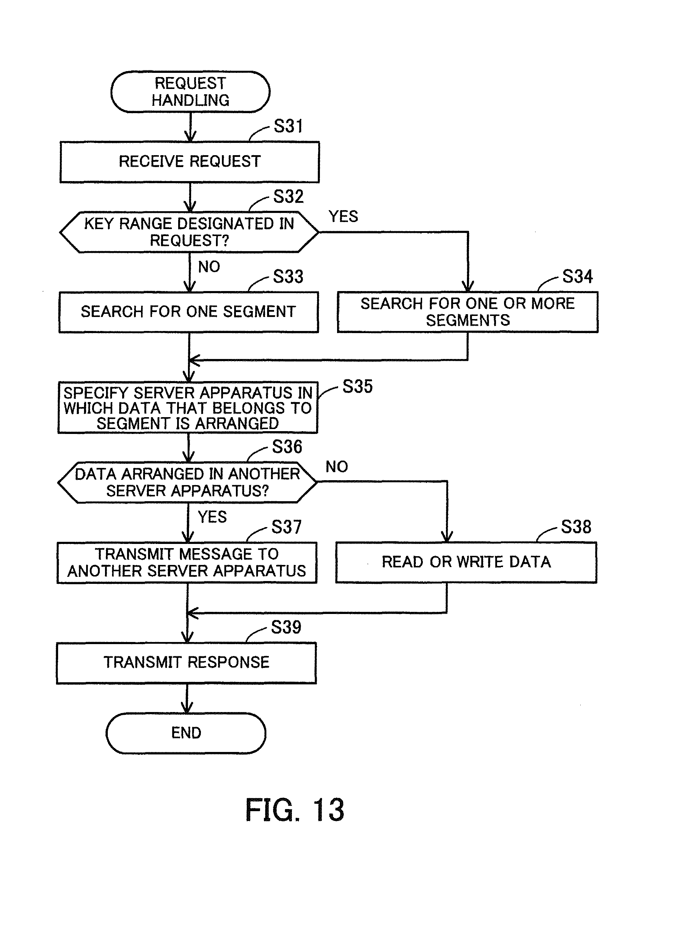

FIG. 13 is a flow chart of an example of request handling. It is assumed that the server apparatus 100 performs request handling. The server apparatus 100a, 100b, and 100c also perform the same request handling that the server apparatus 100 performs. A process indicated in FIG. 13 will now be described in order of step number.

(Step S31) The request receiving block 111 receives a request from the client apparatus 300. The request may be a read request in which one key is designated, a read request in which a key range is designated, or a write request in which one key is designated.

(Step S32) The segment management block 122 determines whether or not a key range is designated in the request received in step S31. If a key range is designated in the request received in step S31, then the segment management block 122 proceeds to step S34. If a key range is not designated in the request received in step S31, then the segment management block 122 proceeds to step S33.

(Step S33) The segment management block 122 refers to segment information stored in the segment information storage block 121, and searches for a segment to which a key designated in the request belongs. For example, at this time the segment management block 122 compares a prefix of the key represented as a b-ary number (b is an integer greater than or equal to 2) with a label from a root node to a leaf node of a segment management tree, and specifies a leaf node whose label matches the prefix. The segment management block 122 searches for a segment corresponding to the specified leaf node.

(Step S34) The segment management block 122 refers to segment information and searches for all segments including at least one key within the key range designated in the request. For example, in order to search for plural segments, the segment management block 122 finds the longest prefix common to the maximum key value and the minimum key value within the key range, and specifies a node whose label matches the longest prefix. The segment management block 122 then specifies plural leaf nodes below the specified node. The segment management block 122 searches for plural segments corresponding to the specified plural leaf nodes.

For example, it is assumed that the key range is 00010 to 00101. The longest prefix common to the minimum key value "00010" and the maximum key value "00101" is "00". Accordingly, the segment management block 122 specifies leaf nodes whose labels are "000" and "001" and which are below a node whose label is "00". The segment management block 122 then searches for segments corresponding to the leaf nodes whose labels are "000" and "001".

(Step S35) The segment management block 122 converts a label of the segment for which the segment management block 122 searches in step S33 or S34 by the use of label conversion method 1 or 2 applied in the above data transfer determination process. The segment management block 122 then applies a hash function to the label or a label after the conversion to calculate a hash value. The segment management block 122 then specifies from the hash value a server apparatus in which the segment is arranged. At this time, for example, the method indicated in FIG. 6 is used. If the segment management block 122 searches for the plural segments in step S34, then the segment management block 122 may specify plural server apparatus. In that case, the following steps S36 through S38 are performed on each specified server apparatus or on each segment.

(Step S36) The segment management block 122 determines whether or not the segment management block 122 specifies another server apparatus in step S35 as a server apparatus in which a segment to which data to be processed belongs is arranged. If the segment management block 122 specifies another server apparatus in step S35, then step S37 is performed. If the segment management block 122 specifies in step S35 the server apparatus (server apparatus 100) including itself, then step S38 is performed.

(Step S37) The message processing block 114 transmits a message indicative of a read request or a write request to another server apparatus specified in step S35. The message includes a key or a key range, of a key or a key range designated in the request from the client apparatus 300, stored in the destination server apparatus. After that, the message processing block 114 receives a response message from the destination server apparatus. The response message includes data corresponding to the key or a report on the completion of writing.

(Step S38) The data processing block 131 performs data processing in response to the request from the client apparatus 300. If the request is a read request, then the data processing block 131 reads out from the data storage section 140 data corresponding to a key or a key range, of a key or a key range designated in the request from the client apparatus 300, stored in the server apparatus 100. If the request is a write request, then the data processing block 131 associates a key included in the request with data, and writes them to the data storage section 140.

(Step S39) The request receiving block 111 transmits to the client apparatus 300 a response to the request which it receives in step S31. If the request is a read request, then the request receiving block 111 transmits to the client apparatus 300 the data read out from another server apparatus or the server apparatus 100 in step S37 or S38 as the response. If the request is a write request, then the request receiving block 111 transmits to the client apparatus 300 a report on the completion of writing confirmed in step S37 or S38 as the response.

(Example of Sequence of Operation in Information Processing System)

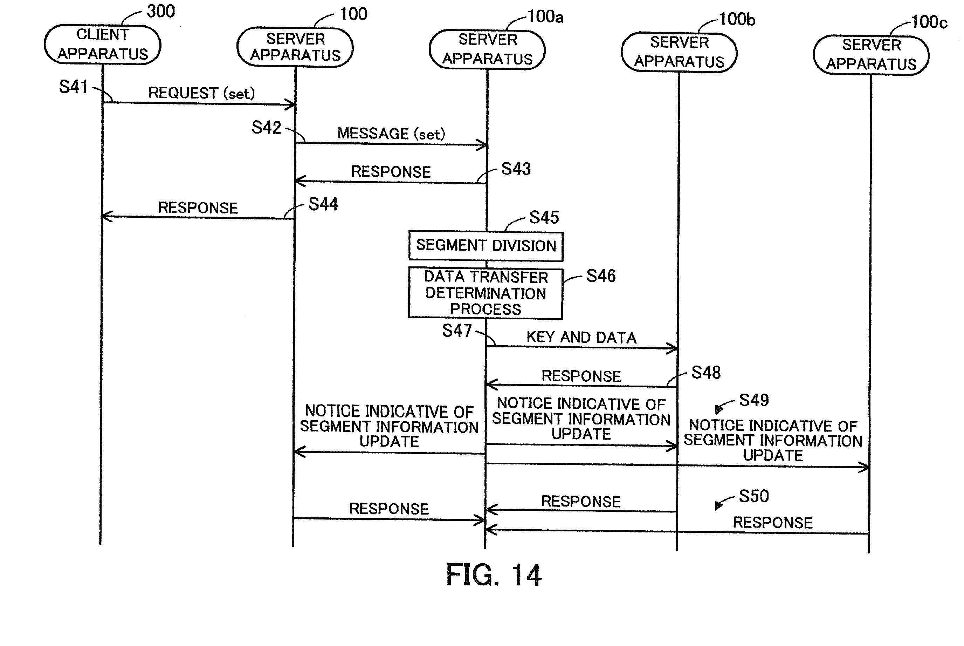

FIG. 14 is a sequence diagram of an example of operation in the information processing system. It is assumed that the client apparatus 300 transmits to the server apparatus 100 a request to write data and that segment division occurs as a result of writing the data.

(Step S41) The client apparatus 300 transmits to the server apparatus 100 a request indicative of data writing. The request includes a key and data.

(Step S42) The server apparatus 100 searches on the basis of segment information it has for a segment to which the key belongs, and converts a label by the use of applied label conversion method 1 or 2. The server apparatus 100 then uses a label after the conversion and a hash function for specifying a server apparatus (server apparatus 100a, in this case) in which data that belongs to the segment is arranged. The server apparatus 100 then transmits to the server apparatus 100a a message indicative of a write request. The message includes the key and the data.

(Step S43) The server apparatus 100a associates the key included in the message received from the server apparatus 100 with the data included in the message received from the server apparatus 100, and writes them to a storage device included therein. The server apparatus 100a then transmits to the server apparatus 100 a response indicative of the completion of the writing.

(Step S44) When the server apparatus 100 confirms that the server apparatus 100a has completed the writing, the server apparatus 100 transmits a response to the client apparatus 300.

(Step S45) The server apparatus 100a detects that the amount of or the number of pieces of data which belongs to the segment has exceeded a threshold as a result of writing the data. The server apparatus 100a divides the segment into b (two, for example) segments.

(Step S46) The server apparatus 100a performs a data transfer determination process like that indicated in FIG. 10. In the following description it is assumed that data which belongs to the two segments after the division is distributed and that data which belongs to the two segments after the division is stored in the server apparatus 100a and 100b.

(Step S47) The server apparatus 100a transmits to the server apparatus 100b a key and data stored in the server apparatus 100b.

(Step S48) The server apparatus 100b associates the key received from the server apparatus 100a with the data received from the server apparatus 100a, and writes them to a storage device included therein. The server apparatus 100b then transmits to the server apparatus 100a a response indicative of the completion of the writing.

(Step S49) The server apparatus 100a deletes from the storage device included therein the data in the segment duplication of which into the server apparatus 100b is completed. In addition, the server apparatus 100a updates segment information which it has so as to make the segment division reflect. The server apparatus 100a then transmits to all the other server apparatus (server apparatus 100, 100b, and 100c) notice indicative of the segment information update.

(Step S50) Each of the server apparatus 100, 100b, and 100c updates segment information which it has on the basis of the notice from the server apparatus 100a. Each of the server apparatus 100, 100b, and 100c then transmits to the server apparatus 100a a response indicative of the completion of the segment information update. As a result, the segment information update performed by the server apparatus 100a is reflected in the segment information which each of the server apparatus 100, 100b, and 100c has.

According to the second embodiment, each of the server apparatus 100, 100a, 100b, and 100c associates a key with data, stores them, and performs data processing for a key designated by the client apparatus 300. This decreases the complexity of data processing and the load. Furthermore, data is distributed and is stored in plural server apparatus. In addition, any server apparatus can accept a request from the client apparatus 300. As a result, it is possible to make a design so as to prevent an apparatus which becomes a bottleneck from appearing. Accordingly, the availability of the information processing system is improved.

Furthermore, key space is divided into plural segments and data is arranged in server apparatus on a segment basis. Accordingly, there is a high probability that data corresponding to keys the values of which are close to one another is stored in the same server apparatus. As a result, data processing in which a range of keys is designated is performed efficiently. In addition, whether or not there is a need for segment division or data transfer is determined independently for each segment on the basis of its label. Therefore, each server apparatus makes a determination without conducting negotiations with another server apparatus. As a result, scalability is improved.

Furthermore, if determined division depth (hierarchical level interval) is not satisfied, then the movement of data which belongs to a generated segment to another storage device is restricted. This checks an increase in the average amount of data transferred at the time of distributing a load in the information processing system. Therefore, the movement of data from one storage device to another at load distribution time does not impede, for example, access by a user to data in the information processing system.

Furthermore, if label conversion method 2 is applied in a data transfer determination process, timing at which a data transfer occurs for plural segments can be staggered. That is to say, it is possible to prevent data transfers from occurring in the same period of time. Therefore, the load on the information processing system is reduced.

As stated above, the data management in the second embodiment can be realized by making each of the server apparatus 100, 100a, 100b, and 100c as computers execute a data management program. The program is recorded in a computer-readable record medium (record medium 33, for example). A magnetic disk, an optical disk, a magnetooptical disk, a semiconductor memory, or the like is used as a record medium. A magnetic disk may be a FD or a HDD. An optical disk may be a CD, a CD-R(Recordable)/RW(ReWritable), a DVD, or a DVD-R/RW.

In order to circulate the program, portable record media or the like in which the program is recorded are provided. Alternatively, the program may be stored in a storage device of another computer and be distributed via the network 41. A computer stores in a storage device (HDD 103, for example) the program recorded in a portable record medium, the program received from another computer, or the like, reads the program from the storage device, and executes the program. However, the computer may directly execute the program read from the portable record medium or directly execute the program received from another computer via the network 41.

The foregoing is considered as illustrative only of the principles of the present invention. Further, since numerous modifications and changes will readily occur to those skilled in the art, it is not desired to limit the invention to the exact construction and applications shown and described, and accordingly, all suitable modifications and equivalents may be regarded as falling within the scope of the invention in the appended claims and their equivalents.

Reference Signs List

10      information processing apparatus
11      storage section
12      control section
20-1    through 20-n storage device

sg1, sg2a, sg2b, sg3a, sg3b, sg3c, sg3d, sg4a, sg4b, sg5a, sg5b, sg5c, sg5d segment

**Claims**

1. An information processing apparatus used in an information processing system which divides a set of keys associated with data to be stored into a plurality of segments and which manages arrangement of the data in a plurality of storage devices on a segment basis, the information processing apparatus comprising:

   a storage section which stores segment information indicative of correspondences between the segments and the keys; and
   a control section which divides, according to an increase in data which belongs to a segment, the segment into a plurality of segments and updates the segment information,
   wherein the control section allows data that belongs to at least one of a plurality of second segments obtained by dividing a first segment once or by hierarchically dividing the first segment N times, at the time of the N meeting a determined condition, to be moved from a first storage device which stores data that belongs to the first segment to a second storage device and restricts, at the time of the N not meeting the determined condition, movement of data that belongs to the plurality of second segments, the N being greater than 1.

2. The information processing apparatus according to claim 1, wherein the determined condition is that an interval between a hierarchical level to which the first segment belongs and a hierarchical level to which the plurality of second segments belong is a multiple of a determined hierarchical level interval greater than or equal to 2.

3. The information processing apparatus according to claim 1 or 2, wherein:

   a label whose length corresponds to division depth is given to each segment; and
   the control section determines on the basis of labels given to the plurality of second segments whether or not the determined condition is met.

4. The information processing apparatus according to any of claims 1 to 3, wherein whether or not the determined condition is met is determined with a method by which same determination results are obtained for segments that belong to a same hierarchical level.

5. The information processing apparatus according to any of claims 1 to 3, wherein whether or not the determined condition is met is determined with a method by which different determination results are obtained for segments that belong to a same hierarchical level.

6. A data management method used by an information processing system which divides a set of keys associated with data to be stored into a plurality of segments and which manages arrangement of the data in a plurality of storage devices on a segment basis, the data management method comprising:

dividing a segment into a plurality of segments according to an increase in data which belongs to the segment and updating segment information indicative of correspondences between the segments and the keys;
allowing data that belongs to at least one of a plurality of second segments obtained by dividing a first segment once or by hierarchically dividing the first segment N times, at the time of the N meeting a determined condition, to be moved from a first storage device which stores data that belongs to the first segment to a second storage device, the N being greater than 1; and
restricting, at the time of the N not meeting the determined condition, movement of data that belongs to the plurality of second segments.

7. A program executed by a computer used in an information processing system which divides a set of keys associated with data to be stored into a plurality of segments and which manages arrangement of the data in a plurality of storage devices on a segment basis, the program making the computer:

divide, according to an increase in data which belongs to a segment, the segment into a plurality of segments and update segment information indicative of correspondences between the segments and the keys;
allow data that belongs to at least one of a plurality of second segments obtained by dividing a first segment once or by hierarchically dividing the first segment N times, at the time of the N meeting a determined condition, to be moved from a first storage device which stores data that belongs to the first segment to a second storage device, the N being greater than 1; and
restrict, at the time of the N not meeting the determined condition, movement of data that belongs to the plurality of second segments.

DIVISION DEPTH CONDITION: WHEN HIERARCHICAL LEVEL INTERVAL IS MULTIPLE OF 2, TRANSFER IS ALLOWED.

FIG. 1

CLIENT
APPARATUS
300

MANAGEMENT
APPARATUS
200

42

NETWORK

41 NETWORK

100

100a

100b

100c

SERVER
APPARATUS

SERVER
APPARATUS

SERVER
APPARATUS

SERVER
APPARATUS

# FIG. 2

SERVER APPARATUS 100

| CPU 101 | | IMAGE SIGNAL PROCESSING UNIT 104 | DISPLAY 31 |

| RAM 102 | | INPUT SIGNAL PROCESSING UNIT 105 | INPUT DEVICE 32 |

| HDD 103 | | DISK DRIVE 106 | RECORD MEDIUM 33 |

| | | COMMUNICATION UNIT 107 | NETWORK 41 |

FIG. 3

(A)

CLIENT
APPARATUS

SERVER
APPARATUS

SERVER
APPARATUS

300

get(2) →

get(2) →

100a

← data2

← data2

100

| key | value |
|-----|-------|
| 2 | data2 |
| 3 | data3 |

(B)

CLIENT
APPARATUS

SERVER
APPARATUS

SERVER
APPARATUS

300

range_get(2,5) →

range_get(2,3) →

100a

← data2-5

← data2,3

100

| key | value |
|-----|-------|
| 2 | data2 |
| 3 | data3 |

range_get(4,5)

SERVER
APPARATUS

data4,5

100c

| key | value |
|-----|-------|
| 4 | data4 |
| 5 | data5 |

(C)

CLIENT
APPARATUS

SERVER
APPARATUS

SERVER
APPARATUS

300

set(1,data1) →

set(1,data1) →

100a

← OK

← OK

100

| key | value |
|-----|-------|
| 1 | data1 |
| 2 | data2 |
| 3 | data3 |

# FIG. 4

FIG. 5

$2^n-1$ 0

[SERVER APPARATUS 100c]
h (s4)

[SERVER APPARATUS 100]
h (s1)

h (001)

h (0)

h (s3)
[SERVER APPARATUS 100b]

h (s2)
[SERVER APPARATUS 100a]

# FIG. 6

100

SERVER APPARATUS

COMMUNICATION PROCESSING SECTION 110

REQUEST RECEIVING BLOCK 111

MESSAGE PROCESSING BLOCK 114

TRANSFER CONDITION STORAGE BLOCK 112

DATA TRANSMISSION BLOCK 113

STORAGE DESTINATION DETERMINATION SECTION 120

SEGMENT INFORMATION STORAGE BLOCK 121

SEGMENT MANAGEMENT BLOCK 122

130

THRESHOLD CALCULATION BLOCK 133

DIVISION DETERMINA-TION BLOCK 134

DATA PROCESSING BLOCK 131

CALCULATION EXPRESSION STORAGE BLOCK 132

EVENT PROCESSING SECTION

140

DATA STORAGE SECTION

FIG. 7

```
        ( SEGMENT DIVISION )
                 │
                 ▼        ┌ S11
        ┌──────────────────┐
        │ SEARCH FOR WRITTEN│
        │     SEGMENT      │
        └──────────────────┘
                 │        ┌ S12
                 ▼
        ┌──────────────────┐
        │ CALCULATE THRESHOLD│
        │    FROM LABEL     │
        └──────────────────┘
                 │        ┌ S13
                 ▼
        ╱ AMOUNT OF OR NUMBER OF ╲  NO
        ╲ PIECES OF DATA > THRESHOLD? ╱───────┐
                 │ YES                        │
                 ▼        ┌ S14               │
        ┌──────────────────┐                 │
        │ DEFINE CHILD SEGMENTS│              │
        └──────────────────┘                 │
                 │                            │
                 ▼        ┌ S15               │
        ┌──────────────────┐                 │
    ┌──▶│  SELECT ONE KEY  │                 │
    │   └──────────────────┘                 │
    │            │        ┌ S16              │
    │            ▼                           │
    │   ┌──────────────────┐                │
    │   │ ASSIGN KEY TO CHILD│              │
    │   │     SEGMENT      │                │
    │   └──────────────────┘                │
    │            │        ┌ S17             │
    │  NO        ▼                          │
    └──── ╱ ALL KEYS SELECTED? ╲            │
                 │ YES                      │
                 ▼        ┌ S18             │
          ╱ DATA TRANSFER ALLOWED? ╲        │
     NO  ╱   (DATA TRANSFER        ╲        │
    ┌────  DETERMINATION PROCESS)  ╱        │
    │            │ YES     ┌ S19            │
    │            ▼                          │
    │   ┌──────────────────┐               │
    │   │ TRANSFER DATA WHICH│             │
    │   │BELONGS TO CHILD SEGMENT│         │
    │   └──────────────────┘               │
    │            │                          │
    └────────────┤                          │
                 ▼        ┌ S20             │
        ┌──────────────────┐               │
        │ UPDATE SEGMENT   │               │
        │   INFORMATION    │               │
        └──────────────────┘               │
                 │                          │
                 ▼◀─────────────────────────┘
            (   END   )
```

FIG. 8

FIG. 9

EP 2 801 911 A1

EP 2 801 911 A1

DATA TRANSFER
DETERMINATION PROCESS

S21
CONVERT LABEL OF CHILD
SEGMENT

S22
INQUIRE SERVER APPARATUS IN
WHICH DATA THAT BELONGS TO
CHILD SEGMENT IS TO BE
ARRANGED

S23
DETERMINE SERVER APPARATUS

S24
SERVER APPARATUS DETERMINED
FOR CHILD SEGMENT DIFFERENT
FROM SERVER APPARATUS IN WHICH
DATA THAT BELONGS TO PARENT
SEGMENT IS ARRANGED?

NO

YES

S25
ALLOW DATA THAT BELONGS
TO CHILD SEGMENT IN POINT TO
BE TRANSFERRED

S26
NOT ALLOW DATA THAT
BELONGS TO EACH CHILD
SEGMENT TO BE TRANSFERRED

END

FIG. 10

28

N (HIERARCHICAL LEVEL INTERVAL AT WHICH TRANSFER IS ALLOWED) = 4

$\bigcirc$ L : SEGMENT
L : LABEL

n=1

n=2

n=3

n=4

n=5

FIG. 11

FIG. 12

REQUEST
HANDLING

↓ S31

RECEIVE REQUEST

↓ S32

KEY RANGE DESIGNATED IN
REQUEST?

YES →

NO
↓ S33

SEARCH FOR ONE SEGMENT

S34

SEARCH FOR ONE OR MORE
SEGMENTS

↓ S35

SPECIFY SERVER APPARATUS IN
WHICH DATA THAT BELONGS TO
SEGMENT IS ARRANGED

↓ S36

DATA ARRANGED IN ANOTHER
SERVER APPARATUS?

NO →

YES
↓ S37

TRANSMIT MESSAGE TO
ANOTHER SERVER APPARATUS

S38

READ OR WRITE DATA

↓ S39

TRANSMIT RESPONSE

↓

END

FIG. 13

FIG. 14

EP 2 801 911 A1

## INTERNATIONAL SEARCH REPORT

| International application No. |
| --- |
| PCT/JP2012/050158 |

### A. CLASSIFICATION OF SUBJECT MATTER
*G06F13/00*(2006.01)i, *G06F12/00*(2006.01)i, *H04N7/173*(2011.01)i

According to International Patent Classification (IPC) or to both national classification and IPC

### B. FIELDS SEARCHED

Minimum documentation searched (classification system followed by classification symbols)
G06F13/00, G06F12/00, H04N7/173

Documentation searched other than minimum documentation to the extent that such documents are included in the fields searched
Jitsuyo Shinan Koho        1922-1996    Jitsuyo Shinan Toroku Koho    1996-2012
Kokai Jitsuyo Shinan Koho    1971-2012    Toroku Jitsuyo Shinan Koho    1994-2012

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | WO 2007/060862 A1 (Brother Industries, Ltd.), 31 May 2007 (31.05.2007), paragraphs [0124] to [0143] & JP 2007-148545 A       & US 2008/0215663 A1 | 1-7 |
| A | WO 2007/083531 A1 (Brother Industries, Ltd.), 26 July 2007 (26.07.2007), paragraphs [0077] to [0092] & JP 2007-193626 A       & US 2008/0281982 A1 | 1-7 |
| A | Daisuke TAKEMOTO, "Load Balancing Schemes for Dynamic System Configuration in Content-Addressable Network", IEICE Technical Report, 29 July 2003 (29.07.2003), vol.103, no.248, pages 13 to 18 | 1-7 |

☒  Further documents are listed in the continuation of Box C.        ☐    See patent family annex.

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 06 February, 2012 (06.02.12) | 14 February, 2012 (14.02.12) |

| Name and mailing address of the ISA/ Japanese Patent Office | Authorized officer |
| --- | --- |
| Facsimile No. | Telephone No. |

Form PCT/ISA/210 (second sheet) (July 2009)

**INTERNATIONAL SEARCH REPORT**

International application No.

PCT/JP2012/050158

C (Continuation).   DOCUMENTS CONSIDERED TO BE RELEVANT

| Category* | Citation of document, with indication, where appropriate, of the relevant passages | Relevant to claim No. |
|---|---|---|
| A | Sriram Ramabhadran et.al, Prefix Hash Tree: An Indexing Data Structure over Distributed Hash Tables, 2004, [retrieval date 06 February 2012 (06.02.2012)] | 1-7 |

Form PCT/ISA/210 (continuation of second sheet) (July 2009)